# EUROPEAN PATENT APPLICATION

(11) **EP 1 975 917 A2**
(43) Date of publication of application: **01.10.2008**
(21) Application number: 08251101.5
(22) Date of filing: 27.03.2008
(51) Int. Cl.: G09G 5/14, G06F 3/14

(54) **Method and system to reproduce contents, and recording medium including program to reproduce contents**

(30) Priority: 30.03.2007 JP 2007094526
(71) Applicant: Ricoh Company, Ltd., Tokyo 143-8555 (JP)
(72) Inventor: Yamagata, Junichi, Tokyo 143-8555 (JP); Soulier, Christophe, Tokyo 143-8555 (JP)
(74) Representative: Leeming, John Gerard

(57) **Abstract**

A contents reproduction system includes a display unit (2), a processor (5) configured to simultaneously reproduce video contents and non-video visual contents on the display unit (2), an input unit (1) through which an instruction is sent to the processor, and a storage unit (4) storing the video contents, the non-video visual contents, reproduction synchronization information, and display layouts. The reproduction synchronization information associates the video contents, the non-video visual contents, and the display layouts with each other for each video scene. The processor (5) refers to the reproduction synchronization information and changes the non-video visual content and the display layout for each video scene. When the user requests to change display layout via the input unit (1), the processor (5) allows a user to select one of the display layouts and changes at least a current display layout to the display layout selected by the user.

## Description

The present invention generally relates to a method and a system to reproduce visual contents, and a recording medium including a program to reproduce visual contents.

A method to simultaneously reproduce a moving image (video contents) and visual still images (non-video contents) such as slides and text has been proposed. In a known method, composite contents including a video image and still images can be reproduced in a predetermined display layout. Such a display layout is set by a person who creates the composite contents.

However, the display layout of the composite contents set by its creator is not necessarily convenient for users of the composite contents.

Further, it may be preferable to change the display layout according to scenes of the composite contents. For example, in one scene, the user may wish to enlarge a video area and reduce a text area so as to closely observe movement of an object in the video, and in another scene, the user may wish to reduce the video area and enlarge the text area so as to check its content.

In view of the foregoing, various illustrative embodiments of the present invention disclosed herein provide added convenience for users of composite contents.

In one illustrative embodiment, a contents reproduction system includes a display unit configured to display contents, a processor configured to simultaneously reproduce video contents and non-video visual contents on the display unit, an input unit through which an instruction is sent to the processor, and a storage unit storing the video contents, the non-video visual contents, templates of display layouts, and reproduction synchronization information that associates the video contents, the non-video visual contents, and the display layouts with each other for each video scene. The processor refers to the reproduction synchronization information stored in the storage unit, reads out from the storage unit a non-video visual content corresponding to each video, and changes the non-video visual content and the display layout as reproduction of video scenes progresses. When the user requests to change the display layout via the input unit, the processor allows a user to select one of the display layouts described in the display layout templates stored in the storage unit and changes at least a current display layout to the display layout selected by the user.

In another illustrative embodiment, a contents reproduction method used in the contents reproduction system described above includes referring to the reproduction synchronization information stored in the storage unit, reading out from the storage unit a non-visual video content corresponding to each video scene, changing the non-video visual content as reproduction of video scenes progresses, changing the display layout as reproduction of video scenes progress, allowing a user to select one of the display layouts described in the display layout templates stored in the storage unit when the user requests to change the display layout via the input unit, and changing at least a current display layout to the display layout selected by the user.

In another illustrative embodiment, a recording medium stores a contents reproduction program used in the contents reproduction system described above for executing the contents reproduction method described above.

A more complete appreciation of the disclosure and many of the attendant advantages thereof will be readily obtained as the same becomes better understood by reference to the following detailed description when considered in connection with the accompanying drawings, wherein:
FIG. 1 is a block diagram illustrating a configuration of a contents reproduction system according to an illustrative embodiment of the present invention;
FIG. 2 illustrates reproduction synchronization information included in the contents reproduction system shown in FIG. 1;
FIG. 3 illustrates display layout templates included in the contents reproduction system shown in FIG. 1;
FIG. 4 is a screen format diagram illustrating an example of a display layout of composite contents;
FIG. 5 is a screen format diagram illustrating another example of the display layout of the composite contents;
FIG. 6 illustrates a sequence of basic operations performed by the reproduction program shown in FIG. 1;
FIG. 7 illustrates a layout selection function sequence of the reproduction program shown in FIG. 1; and
FIG. 8 illustrates a structure of a layout selection window.

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that operate in a similar manner and achieve a similar result.

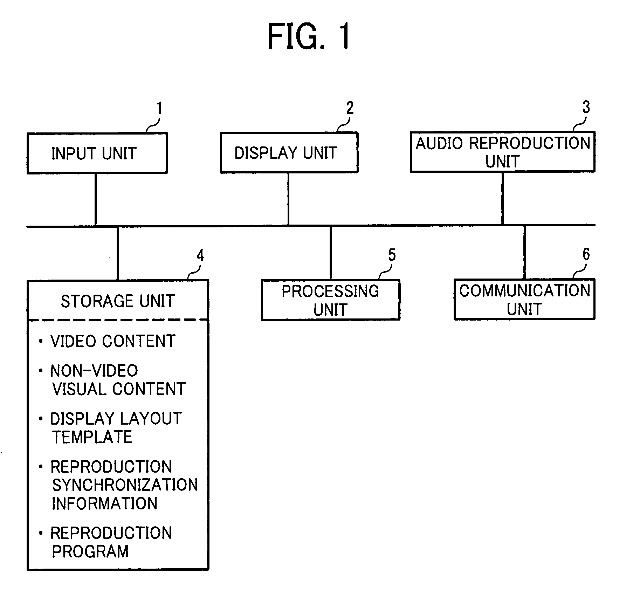

Referring now to the drawings, wherein like reference numerals designate identical or corresponding units throughout the several views, particularly to FIG. 1, a contents reproduction system according to an illustrative embodiment of the present invention is described.

FIG. 1 is a block diagram illustrating an example of a configuration of the contents reproduction system. Hardware of the contents reproduction system includes standard components of a computer. As shown in FIG. 1, the contents reproduction system includes an input unit 1, a display unit 2, an audio reproduction part 3, a storage unit 4, a processing unit 5, and a communication unit 6.

The input unit 1 includes an input device, such as a keyboard and a pointing device (e.g., mouse). Through the input unit 1, commands to execute a program, events that affect processing of the program, etc. are input. The display unit 2 includes a display monitor on which composite contents are reproduced and a graphic user interface (GUI) is displayed. The audio reproduction part 3 includes an audio interface and outputs audio information of the video, etc. to an audio output terminal. The storage unit 4 includes a random access memory (RAM), a read only memory (ROM), and a hard disk drive (HDD), and stores a program to reproduce composite contents, program data, etc. The processing unit 5 includes a processor, such as a central processing unit (CPU), and performs various types of information processing. The communication unit 6 includes a communication interface such as a network interface card (NIC), and exchange data with an external computer.

Further, although not shown in FIG. 1, the contents reproduction system may include a reading part to read removable media, such as a CD ROM drive and a memory card reader, to facilitate reception of contents, programs, etc.

In the present embodiment, the storage unit 4 stores contents to be reproduced and a program to reproduce those contents. Those contents include video contents and visual contents other than the video contents (non-video visual contents). Examples of such non-video visual contents include still image contents such as slides, and text contents such as table of contents of the slides and bibliographical information. The storage unit 4 further stores a plurality of display layout templates to display the video contents and the non-video visual contents, and reproduction synchronization information to synchronize a reproduction timing of the video contents with that of the non-video visual contents.

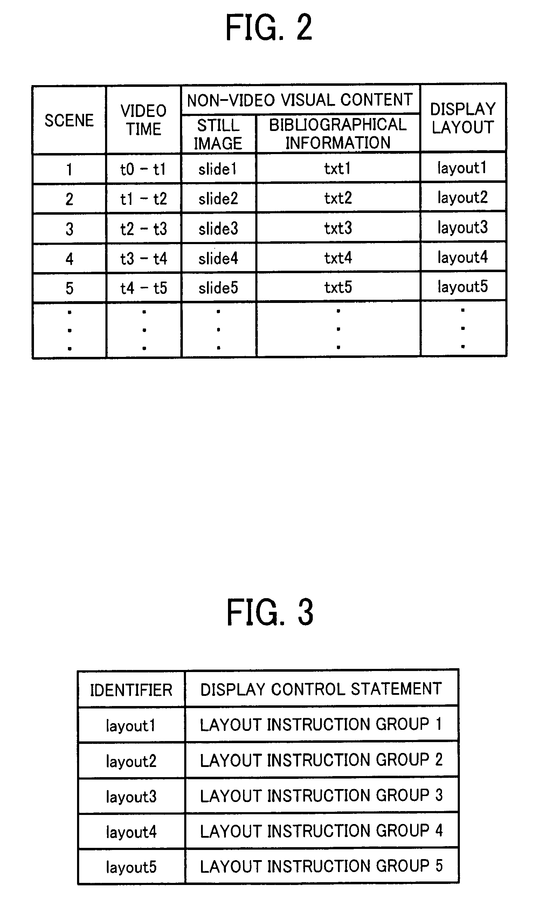

FIG. 2 is a table of data to be associated with each other by the reproduction synchronization information. In FIG. 2, a video time is a value of a time axis of the video contents by which the video contents are divided into video scenes. In the present embodiment, the non-video visual contents include slides as still images and bibliographical information thereof as text information. In FIG. 2, slide1 through slide5 are identifiers of slide 1 through 5, txt1 through txt3 are identifier of bibliographical information 1 through 3, and layout1 through layout4 are identifiers of display layout 1 through 4, respectively.

For each video time period, the reproduction synchronization information associates the video contents with the non-video visual content that is to be simultaneously reproduced with the video contents. For example, in FIG. 2, the video time period t0-t1 is associated with the slide 1 and the bibliographical information 1 so as to be simultaneously reproduced in a scene 1. More specifically, each video time period is associated with the identifier of the non-video visual content. Similarly, each of four video time periods t1-t2, t2-t3, t3-t4, and t4-t5 is associated with one of slides 2 through 5 (slide2 through slide5) and one of bibliographical information 1 through 3 (txt1 through txt3). As the identifier of the non-video visual content, a file path of the non-video visual content may be directly associated with the video time period.

Further, the reproduction synchronization information associates each video time period with the identifier of one of the display layouts 1 through 5 to be used to display the video contents and the non-video visual contents. In FIG. 2, for example, the identifier of the video time period and that of the display layout are associated with each other so that the display layout 1 is used to display the video contents corresponding to video time period t0-t1, and the slide 1 and the bibliographical information 1 (the non-video visual contents). Similarly, the video contents corresponding to each of video time periods t1-t2, t2-t3, t3-t4, and t4-t5 is associated with one of the display layouts 1 through 4. The reproduction synchronization information further associates each video time period with a scene identifier to identify each video scene.

It is to be noted that the table shown in FIG. 2 only shows information to be associated with each other, and it is not necessary to manage these information associations in such a tabular form. Rather, it is sufficient when the video time is associated with both the non-video visual contents and the display layout in any given form in the storage unit 4. For example, these associations can be written directly in a source of the reproduction program or a separate source file that is read by the reproduction program.

In the present embodiment, it is assumed that the reproduction program is written in HTML (Hypertext Markup Language) or XHTML (Extensible Hypertext Markup Language) format, and the associations, described above, that correspond to the reproduction synchronization information are written in a source of the HTML or XHTML. For example, the video time and the display layout may be associated with each other by including a value of the video time and a value or variable of the identifier of the display layout in one HTML syntax delimited by tags.

Further, in the present embodiment, the source of the reproduction program in HTML or XHTML format includes an executive statement of a script that is JavaScript.

FIG. 3 illustrates a structure of the display layout templates stored in the storage unit 4. Each display layout template associates one of the display layout identifiers shown in FIG. 2 with display control statements to display the contents with that display layout. In the present embodiment, the storage unit 4 stores five display layout templates, and five layout instruction groups are prepared as display control statements so that each display layout provides a different layout of the contents. In the present embodiment, the layout instruction groups are written in HTML or XHTML format, or with tags or methods of a script.

It is to be noted that the structure of the display layout templates shown in FIG. 3 only shows information to be associated with each other, and it is not necessary to manage these information associations in such a tabular form as in FIG. 3. It is sufficient when each display identifier layout is associated with one of the layout instruction groups to execute that display layout in any given form in the storage unit 4. For example, these associations can be written directly in the source of the reproduction program or a separate source file that is read by the reproduction program.

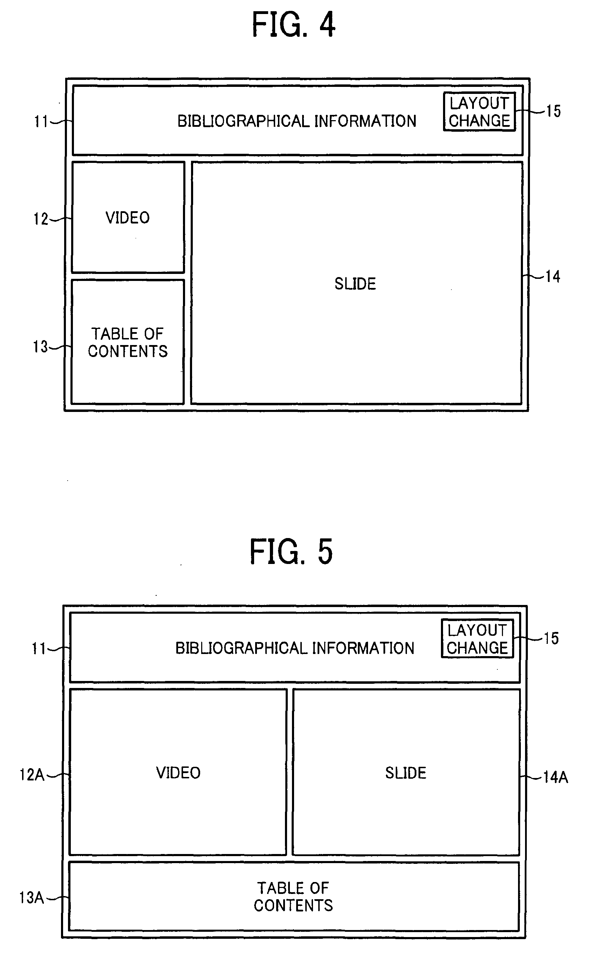

FIGs. 4 and 5 are screen format diagrams illustrating examples of the display layout displayed on the display unit 2 according to the display control statements. For example, the display layout example illustrated in FIG. 4 includes a horizontally long bibliographical information area 11 located in an upper portion thereof, a relatively small video area 12 located on the left under the bibliographical information area 11, and a table of contents area 13 on the left under the video area 12. On the right of the video area 12 and the table of contents area 13, a relatively large slide area 14 is located. Further, a layout change button 15 is provided in an upper right portion.

By contrast, the display layout example illustrated in FIG. 5 includes a horizontally long table of contents area 13A in a lower portion thereof. Above the table of contents area 13A, a video area 12A and a slide area 14A that are similar in size are located side by side. The display layout example illustrated in FIG. 5 further includes a bibliographical information area 11 in an upper portion, and a layout change button 15 in an upper right portion thereof, similarly to the display layout example illustrated in FIG. 4.

Thus, the display layout example illustrated in FIG. 5 is different from that illustrated in FIG. 4. In the present embodiment, the reproduction program controls reproduction of the composite contents so that the display layout is changed from one to another, as shown in FIGs. 4 and 5, as reproduction of the video contents progresses.

The reproduction program is distributed by a creator of the composite contents to users. For example, the video contents, the non-video visual contents, the display layout templates, reproduction synchronization information, and the reproduction programs that are to be stored in the storage unit 4 are stored in one folder, and the folder is compressed and then distributed to the users via a computer network. Alternatively, a removable recording medium storing such a folder may be distributed to the users.

Operations of the reproduction program are described below with reference to FIGs. 2 through 6.

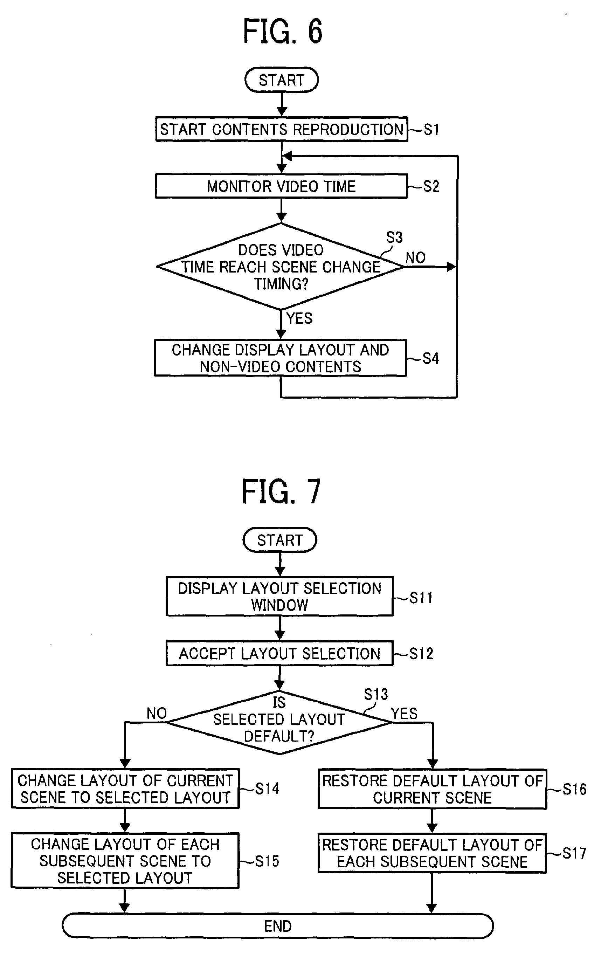

FIG. 6 illustrates sequence of basic operations of the reproduction program. The user of the reproduction program starts the reproduction program stored in the storage unit 4 by using the input unit 1. In the present embodiment, the reproduction program is written in a HTML file. When the start of the reproduction program is instructed, the processing unit 5 activates a web (World Wide Web) browser and executes the HTML file of the reproduction program in a window of the web browser.

To execute the reproduction program, the processing unit 5 refers to the reproduction synchronization information shown in FIG. 2 and identifies the identifier (layout1) of the display layout 1 to be adopted during the video time period t0-t1 as shown in FIG. 2. Further, the processing unit 5 executes the display instruction group 1 that corresponds to the display layout 1 as shown in FIG. 3.

To execute the display instruction group 1, the processing unit 5 displays a predetermined or given frame layout, such as the examples shown in FIGs. 4 and 5, on the display unit 2, and displays the table of contents of the slides in the table of contents area 13 shown in FIG. 4. Further, the processing unit 5 refers to the reproduction synchronization information and reads from the storage unit 4 the slide 1 and the bibliographical information 1 that are to be reproduced during the video time period t0-t1 in the scene 1, and displays the slide 1 in the slide area 14 and the bibliographical information 1 in the bibliographical information area 11. Then, at S1 the processing unit 5 starts reproduction of the video contents, read from the storage unit 4, on the video area 12 and output of sound from the audio reproduction part 3.

At S2, the processing unit 5 monitors the video time, and at S3 checks whether or not the video time reaches a timing, described in the reproduction synchronization information, at which the scene is changed (scene change timing). When the video time reaches a scene change timing denoting a change from the scene 1 to the scene 2 (YES at S3), the processing unit 5 identifies the identifier (layout2) of the display layout 1 that corresponds to the scene 2 as shown in FIG. 2, and executes the layout instruction group 2 that corresponds to the display layout 1.

It is to be noted that it is not necessary to read the layout instruction group corresponding to that display layout template from the storage unit 4. Alternatively, a layout instruction group identical with the layout instruction group corresponding to that display layout template may be preliminarily written in the source of the reproduction program as a subsequent step, and the present embodiment adopts this method.

Thus, at S4 the layout displayed on the display unit 2 is immediately changed from the display layout 1 to the display layout 1 for example, as the display layout illustrated in FIG. 4 is changed to the display layout illustrated in FIG. 5. In this time period, only the display layout can be changed by rewriting an attribute value of an object constituting the video area 12 while reproduction of the video contents is continued. A similar process is performed for each of the bibliographical information area 11, the table of contents area 13, and the slide area 14, and the layout change button 15.

Simultaneously with the layout change described above, the processing unit 5 identifies the identifier (slide2) of the slide 2 and the identifier (txt1) of the bibliographical information 1 that are to be reproduced in the scene 2 based on the reproduction synchronization information. The processing unit 5 reads the slide 2 and the bibliographical information 1 from the storage unit 4, and displays the slide 2 in the slide area 14 and the bibliographical information 1 in the bibliographical information area 11.

It is to be noted that, in the present embodiment, rereading of the bibliographical information 1 from the storage unit 4 can be omitted if the bibliographical information is not changed along with the scene change, as in the scene change from the scene 1 to the scene 2 in the description above.

Thus, along with the change in video scenes, the display layout, the slide, and the bibliographical information are also changed based on the reproduction synchronization information.

The processing unit 5 continues to monitor the video time (S2) and repeatedly changes the display layout and non-video visual contents (S4) in subsequent scenes, similarly to the processes described above, until the reproduction of the video contents ends. Thus, the display layout is changed according to the video contents and/or non-video visual contents so that the users can view the composite contents in suitable layouts.

Moreover, the reproduction program according to the present invention includes a layout selection function used by the users for added convenience in viewing the composite contents. This layout selection function is described below with reference to FIG. 7.

FIG. 7 illustrates a layout selection function sequence. When the reproduction program is started, the processing unit 5 displays the layout change button 15 shown in FIGs. 4 and 5, as a layout change part on the display unit 2. The users can change the display layout to a preferable layout by operating the layout change button 15 with the input unit 1, while the contents are being reproduced.

At S11, the processing unit 5 displays a layout selection window as a pop-up on the display unit 2 when detecting an event in which the layout change button 15 is operated by the input unit 1.

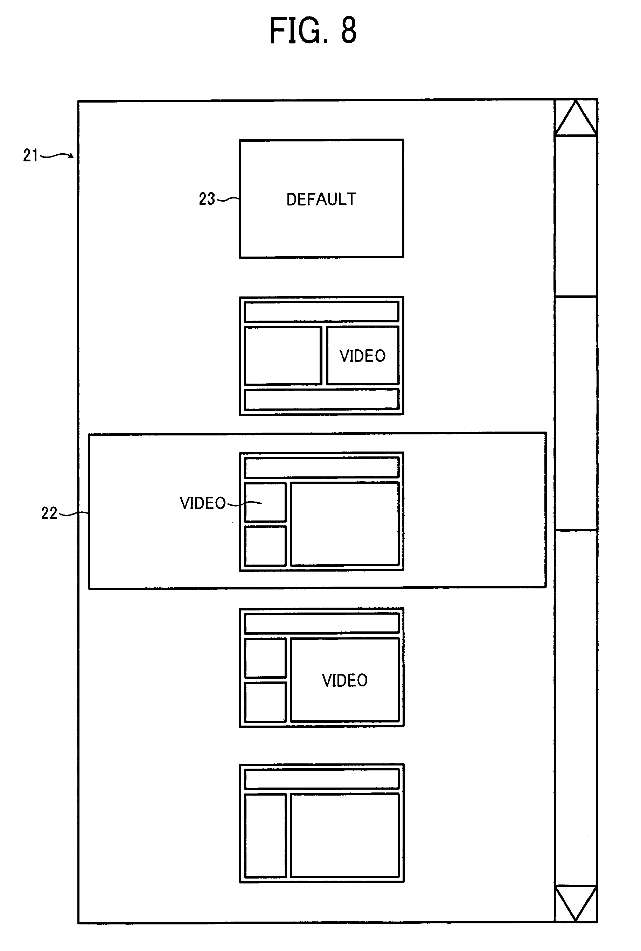

An example of a structure of the layout selection window is shown in FIG. 8. As shown in FIG. 8, a list including thumbnails of selectable display layouts and an default icon 23 for a default layout is displayed in a layout selection window 21. These thumbnail objects of the display layouts and the default icon 23 are preliminarily stored in the storage unit 4. The thumbnail object of each display layout is associated with identifier of the corresponding display layout. The default icon object for the default layout is also associated with an identifier indicating the default. When the user puts an indicator on the thumbnail object of a preferable display layout in the window by operating the input device 1 (mouse) to select that display layout, the display layout becomes an on mouse display 22.

When the user performs a predetermined or given operation, such as a click of the mouse, so as to cause an event that selects the display layout, at S12 the processing unit 5 detects such an event and accepts the layout selection. At S13 the processing unit 5 checks whether or not the default layout is selected. When the selected display layout is not the default (NO at S13), the processing unit 5 obtains the identifier of the display layout associated with the selected thumbnail object and closes the layout selection window 21 (pop-up window).

Further, at S14 the processing unit 5 refers to the display layout template corresponding to this display layout identifier and executes the layout instruction group. As described above, the layout instruction group rewrites the attribute values of the objects displayed in the bibliographical information area 11, the video area 12, the table of contents area 13, and the slide area 14 shown in FIGs. 4 and 5, and thus the display layout in a current scene is changed to the display layout selected by the user with the contents being reproduced maintained.

When the user selects the preferable display layout as described above, the processing unit 5 adopts the selected layout in all subsequent scenes. Therefore, at S15 the processing unit 5 reads out the layout instruction group corresponding to the identifier of the selected display layout from the display layout template and replaces the layout instruction groups preliminarily assigned to be used in the subsequent scenes with those corresponding to the selected display layout. Such rewriting of the source can be executed by rewriting an inner HTML attribute value, etc., of a document object included in the reproduction program. Thus, the display layout selected by the user is maintained in the subsequent scenes.

When the user again calls up the layout selection window 21, the processing unit 5 returns to S11 and displays the layout selection window 21. The processing unit 5 accepts the layout selection at S12 and checks whether or not the display layout selected by the user is the default at S13.

When the user selects the default icon 23 (YES at S13), the processing unit 5 cancels the display layout selected by the user previously, and restores default display layout in each subsequent scene. Therefore, at S16 the processing unit 5 refers to the reproduction synchronization information and obtains the identifier of the display layout associated with a current scene. The processing unit 5 further refers to the display layout template and executes the layout instruction group corresponding to the display layout identifier thus obtained.

As described above, the layout instruction group rewrites the attribute values of the objects displayed in the bibliographical information area 11, the video area 12, the table of contents area 13, and the slide area 14, and thus the default display layout of the current scene is restored with the contents being reproduced maintained.

Further, the processing unit 5 refers to the reproduction synchronization information and obtains the display layout identifier corresponding to each subsequent scene so as to restore the default display layout in each subsequent scene. At S17, the processing unit 5 refers to the display layout templates and reads out therefrom the layout instruction group corresponding to the display layout identifier of each subsequent scene thus obtained, and restores the default layout instruction group assigned in each subsequent scene. As described above, such rewriting of the source can be executed by rewriting an inner HTML attribute value, etc., of a document object included in the reproduction program. Thus, the default display layout is adopted in each subsequent scene.

To rewrite the layout instruction group described in the source, the layout instruction group to be rewritten should be identified. This identification can be achieved by including the display layout identifier corresponding to such a layout instruction group in the document object of the layout instruction group in the source as a clue to such a layout instruction group to be rewritten.

The layout selection function described above enables the user to select a preferred display layout of the composite contents, not limited to the display layout set by the creator of the composite contents, for added convenience. Further, because the user can cancel his/her selection of the display layout and restore the default display layout set by the creator of the composite contents after changing the display layout, the user can freely search for a most suitable display layout for the scene.

Numerous additional modifications and variations of the present disclosure are possible in light of the above teachings. It is therefore to be understood that within the scope of the appended claims, the disclosure of this patent specification may be practiced otherwise than as specifically described herein.

This patent application is based on and claims priority from Japanese Patent Application, No. 2007-094526 filed on March 30, 2007 in the Japan Patent Office, the entire contents of which are incorporated by reference herein.

## Claims

1. A contents reproduction system comprising:
a display unit (2) configured to display contents;
a processor (5) configured to simultaneously reproduce video contents and non-video visual contents on the display unit (2);
an input unit (1) through which an instruction is sent to the processor (5); and
a storage unit (4) storing the video contents and the non-video visual contents,
**characterized in that** the storage unit (4) stores display layout templates and reproduction synchronization information that associates the video contents, the non-video visual contents, and display layouts with each other for each video scene, and
the processor (5) refers to the reproduction synchronization information stored in the storage unit (4), reads out from the storage unit (4) a non-video visual content corresponding to each video scene, changes the non-video visual content as reproduction of video scenes progresses, changes the display layout to a display layout corresponding to each video scene as reproduction of video scenes progresses, allows a user to select one of the display layouts described in the display layout templates stored in the storage unit (4) when the user requests to change the display layout via the input unit (1), and changes at least a current display layout to the display layout selected by the user.

2. A contents reproduction system according to claim 1, wherein, when one of the display layout is selected via the input unit (1), the processor (5) changes a display layout of each subsequent video scene to the display layout selected by the user.

3. A contents reproduction system according to claim 1 or 2, wherein, when the user requests cancellation of the display layout selected by the user via the input unit (1), the processor (5) refers to the reproduction synchronization information stored in the storage unit (4) and restores the display layout of the subsequent video scene to a default layout associated by the reproduction synchronization information.

4. A contents reproduction method for use in a contents reproduction system comprising:
a display unit (2) configured to display contents;
a processor (5) configured to simultaneously reproduce video contents and non-video visual contents on the display unit (2);
an input unit (1) through which an instruction is sent to the processor (5); and
a storage unit (4) storing the video contents and the non-video visual contents,
the contents reproduction method **characterized by** comprising:
referring to reproduction synchronization information, stored in the storage unit (4), that associates the video contents, the non-video visual contents, and display layouts with each other for each video scene,
reading out from the storage unit (4) a non-video visual content corresponding to each video scene;
changing the non-video visual content as reproduction of video scenes progresses;
changing the display layouts stored in the storage unit (4) corresponding to each video scene as reproduction of video scenes progresses;
allowing a user to select one of the display layouts described in the display layout templates stored in the storage unit (4) when the user requests to change display layout via the input unit; and
changing at least a current display layout to the display layout selected by the user.

5. A contents reproduction method according to claim 4, further comprising changing a display layout of each subsequent video scene to the display layout selected by the user when one of the display layout is selected via the input unit.

6. A contents reproduction method according to claim 4 or 5, further comprising:
referring to the reproduction synchronization information stored in the storage unit (4) and restoring the display layout of the subsequent video scene to a default layout associated by the reproduction synchronization information when the user requests cancellation of the display layout selected by the user via the input unit (1) previously.

7. A contents reproduction program comprising code means that, when executed by a contents reproduction system comprising:
a display unit (2) configured to display contents;
a processor (5) configured to simultaneously reproduce video contents and non-video visual contents on the display unit (2);
an input unit (1) through which an instruction is sent to the processor (5); and
a storage unit (4) storing the video contents and the non-video visual contents,
instruct the system to perform a method according to claim 4, 5 or 6.

8. A recording medium storing the contents reproduction program according to claim 7.
